# EUROPÄISCHE PATENTSCHRIFT

(11) **EP 2 331 355 B1**
(45) Veröffentlichungstag und Bekanntmachung des Hinweises auf die Patenterteilung: **29.08.2012**
(21) Anmeldenummer: 09736134.9
(22) Anmeldetag: 05.10.2009
(51) Int. Cl.: B60K 6/48, B60K 6/10, B60W 10/06, B60W 10/08, B60W 10/24, B60W 10/30, B60W 20/00, E02F 9/20, E02F 9/22

(54) **Arbeitsgerät mit Hybridantrieb**
Working machine with a hybrid drive
Machine de travail à propulsion hybride

(30) Priorität: 06.10.2008 DE 102008050553
(43) Veröffentlichungstag der Anmeldung: 15.06.2011
(73) Patentinhaber: Wacker Neuson Produktion GmbH & Co. KG, 80809 München (DE)
(72) Erfinder: STENZEL, Otto, W., 82211 Herrsching a.A. (DE)
(74) Vertreter: Müller - Hoffmann & Partner
(86) Internationale Anmeldenummer: PCT/EP2009/007110
(87) Internationale Veröffentlichungsnummer: WO 2010/040490

(56) Entgegenhaltungen:
- WO-A-2007/043924
- DE-A1- 19 804 204

## Beschreibung

Die Erfindung betrifft ein Arbeitsgerät mit einem Antriebsmotor und einem von dem Antriebsmotor antreibbaren Arbeitsmechanismus.

Derartige Arbeitsgeräte sind insbesondere fahrbare Arbeitsgeräte, wie z.B. Lader, Telehandler, Bagger und Dumper. Derartigen Arbeitsgeräten ist es gemeinsam, dass der Wirkungsgrad meist nicht sehr hoch ist. Üblicherweise müssen große Motorleistungen installiert werden, um den Leistungsbedarf auch für Spitzenbelastungen abzudecken. Durch Anheben von Lasten gewonnene potentielle Energie wird beim Absenken der Lasten in Form von Strömungsverlusten in das Hydrauliksystem (Hydrauliköl) eingetragen. Daher muss ein Hydraulikkühler vorgesehen sein, der ausreichend groß dimensioniert ist und häufig zusätzlich mit einem starken Lüfter kombiniert ist. Daraus resultiert ein insgesamt hoher Kraftstoffverbrauch.

Aus der DE 198 04 204 A1 ist ein Fahrzeug nach dem Oberbegriff des Anspruchs 10 zum Bewegen von Lasten bekannt, das einen Verbrennungsmotor mit steuerbarer Leistung aufweist. Zur Verbesserung der Energiebilanz ist es vorgesehen, dass die Antriebe eine Rückgewinnung der in den sich bewegenden bzw. angehobenen Massen enthaltenen Energie und deren Einspeisung in einen Energiespeicher ermöglichen.

Aus der EP 1 736 433 A1 ist ein Arbeitsgerät nach dem Oberbegriff des Anspruchs 11 bekannt, mit einem Verbrennungsmotor und einem Elektromotor. Der Elektromotor ist in der Lage, einen angekoppelten Arbeitsmechanismus allein, ohne Mitwirkung des Verbrennungsmotors zu betreiben. Er wird durch eine Batterie gespeist und kann seinerseits - bei generatorischem Betrieb - auch zum Aufladen der Batterie genutzt werden.

Der Erfindung liegt die Aufgabe zugrunde, ein Arbeitsgerät anzugeben, mit dem bei deutlich niedrigerem Kraftstoffverbrauch nach wie vor hohe Arbeitsleistungen erzielt werden können. Zudem sollen die Herstellungskosten gegenüber einem konventionellen Arbeitsgerät im Wesentlichen gleich, jedenfalls nicht höher sein.

Die Aufgabe wird erfindungsgemäß durch ein Arbeitsgerät nach Anspruch 1 bzw. Anspruch 11 und durch ein Verfahren nach Anspruch 13 gelöst.

Ein erfindungsgemäßes Arbeitsgerät weist einen Antriebsmotor, einen von dem Antriebsmotor über eine Wirkverbindung antreibbaren Arbeitsmechanismus zum Bewirken einer Arbeitsbewegung sowie einen mit der Wirkverbindung gekoppelten Energiespeicher auf. Der Energiespeicher dient zum Aufnehmen von Energie in einer Speicherphase, in der die von dem Antriebsmotor abgegebene Leistung größer als die von dem Arbeitsmechanismus aktuell benötigte Leistung ist, und zum Abgeben von Energie in einer Entladephase, in der die von dem Antriebsmotor abgegebene Leistung kleiner als die von dem Arbeitsmechanismus aktuell benötigte Leistung ist.

Es hat sich herausgestellt, dass bei Arbeitsgeräten, insbesondere bei Arbeitsgeräten der so genannten Kompaktklasse, also Ladern, Telehandlern, Baggern, Dumper etc. spezifische Arbeitszyklen auftreten. Anders als bei Straßenfahrzeugen folgen nämlich die Lastund Entlastungszyklen schnell hintereinander bzw. überlappen sich sogar. Während also Straßenfahrzeuge häufig über einen längeren Zeitraum in gleicher Weise Leistung erbringen, arbeiten die hier in Rede stehenden Arbeitsgeräte in sehr viel kürzeren, sich dafür aber ständig wiederholenden, geradezu regelmäßigen Arbeitszyklen.

Ein typischer Arbeitszyklus bei einem Lader beginnt z.B. - beginnend mit dem Ausleeren der Schaufel über einem Muldenkipper - mit dem Bremsen des Laders kurz vor dem Muldenkipper und dem gleichzeitigen Anheben und Ausleeren der Schaufel. Kurz danach wird die leere Schaufel abgesenkt, während gleichzeitig oder leicht zeitlich versetzt der Lader wieder rückwärts beschleunigt, um von dem Muldenkipper wegzufahren. Die Rückwärtsbewegung wird dann abgebremst, so dass der Lader wieder vorwärts fahren kann. Während dieser Fahrbewegung wird die Schaufel weiter abgesenkt und schließlich mit Schwung in das aufzunehmende Gut gefahren. Nach Einkippen der Schaufel wird der die Schaufel haltende Arm angehoben, so dass der Lader rückwärts fahren kann, ohne dass das von der Schaufel aufgenommene Gut herunterrieselt. Nach einem Abbremsen der Rückwärtsbewegung wird der Lader wieder nach vorne beschleunigt und die Schaufel weiter angehoben. Bei Erreichen des Muldenkippers wird der Lader abgebremst und die Schaufel entleert, so dass ein neuer Zyklus beginnen kann. Solch ein Zyklus läuft typischerweise in einem Zeitraum von 20 bis 30 Sekunden ab.

Der Arbeitszyklus eines Baggers unterscheidet sich in seiner Belastung nur wenig. Beim Beladen eines Lastwagens hebt der Bagger den Arm mit voller Schaufel über die Bordwand, entleert die Schaufel, dreht den Oberwagen (Beschleunigen und Bremsen) und senkt den Arm über dem aufzunehmenden Gut ab. Zum Füllen der Schaufel wird der Arm eingeknickt und unter gleichzeitigem weiteren Einknicken angehoben, bis die Schaufel voll ist. Dann wird der Arm angehoben und gleichzeitig die Drehbewegung eingeleitet. Vor Erreichen der Entladeposition wird die Drehbewegung abgebremst und die Schaufel schließlich entleert. Auch ein derartiger Zyklus läuft meist innerhalb von etwa 30 Sekunden ab.

Die Arbeitszyklen können sich über einen längeren Zeitraum immer wieder wiederholen. Der Vorgang wird nur dann kurzzeitig unterbrochen, wenn der Muldenkipper gewechselt oder z.B. der Bagger um einige Meter versetzt wird. Auch beim Versetzen jedoch treten Schwachlast- und Hochlastphasen auf.

Während eines Arbeitszyklus sind Phasen mit hohem Leistungsbedarf bzw. einer Leistungsspitze (Beschleunigen des Arbeitsgeräts, Anheben des Arms etc.) und Phasen mit einem Leistungsüberschuss bzw. einem Leistungstal (Abbremsen des Arbeitsgeräts, Abbremsen der Drehbewegung eines Oberwagens, Absenken des Arms und der Schaufel etc.) zu beobachten. Bei vielen Arbeitsvorgängen können mehrfach zwei Energie verbrauchende Arbeitsgänge aufeinander folgen.

Der vorgesehene Energiespeicher sollte daher die Differenz zur mittleren Leistung abdecken. Das bedeutet, dass der Energiespeicher mindestens derart dimensioniert sein sollte, dass er die gesamte kinetische Energie der unmittelbar aufeinander folgenden oder sich auch überlappenden Brems- und Absenkbewegungen aufnehmen kann. Diese Energie kann nachfolgend zur Unterstützung des Antriebsmotors bei der nächsten Arbeitsbewegung oder auch beim Verfahren des Arbeitsgeräts genutzt werden.

Bei dieser Ausgestaltung eines Hybridsystems ist es möglich, den Antriebsmotor, insbesondere also einen Verbrennungsmotor kleiner zu dimensionieren, da der Verbrennungsmotor nicht mehr die Lastspitzen abdecken muss. Diese Lastspitzen, die über die durchschnittliche Belastung hinausgehen, können vielmehr durch den Energiespeicher absorbiert werden.

Der Verbrennungsmotor kann dann mit nahezu konstanter Belastung betrieben werden. Alle von dieser mittleren Motorleistung abweichenden Leistungsspitzen und -täler während eines typischen Arbeitszyklus können in den Energiespeicher eingespeichert bzw. aus dem Energiespeicher ausgespeichert werden. Der Energieinhalt in dem Energiespeicher ist dann am Anfang jedes Arbeitszyklus etwa gleich hoch.

Als Kopplung zwischen der Wirkverbindung und dem Energiespeicher kann ein in der Speicherphase generatorisch und in der Entladephase motorisch betreibbarer Elektromotor vorgesehen sein.

Der Elektromotor wandelt somit im generatorischen Betrieb kinetische Energie, die entweder durch den Antriebsmotor oder durch den Arbeitsmechanismus in die Wirkverbindung eingebracht wird, in elektrischen Strom. Dieser Strom kann dann dem Energiespeicher zugeführt werden.

In der Entladephase wiederum kann der Strom aus dem Energiespeicher dem Elektromotor zugeführt werden, der dann motorisch betrieben wird und kinetische Energie in die Wirkverbindung einbringt. Diese kinetische Energie steht dann dem Arbeitsmechanismus zusätzlich zu der vom Antriebsmotor kommenden Energie zur Verfügung und unterstützt auf diese Weise den Antriebsmotor.

In der Wirkverbindung zwischen dem Antriebsmotor und dem Elektromotor kann ein Ausgleichsgetriebe vorgesehen sein. Dadurch ist es möglich, den Elektromotor in einem für ihn günstigen Drehzahlbereich zu betreiben. Insbesondere kann es vorteilhaft sein, den Elektromotor mit einer höheren Drehzahl zu betreiben, um auf diese Weise seinen Wirkungsgrad zu verbessern.

Der mit der Wirkverbindung gekoppelte Elektromotor kann als Motor direkt auf dem Hauptantriebsstrang sitzen bzw. über das Ausgleichsgetriebe angekoppelt sein. Dabei ist zu beachten, dass die Drehzahl des Hauptantriebsstrangs nicht unter allen Betriebszuständen konstant sein muss, so dass sich Spannung und Frequenz für den Elektromotor verändern können. Die Anpassung muss daher durch eine geeignete Steuer- bzw. Leistungselektronik für den Elektromotor erfolgen.

Die Wirkverbindung zwischen dem Antriebsmotor und dem Arbeitsmechanismus kann durch einen Kupplung trennbar sein. Dadurch kann erreicht werden, dass insbesondere dann, wenn der Arbeitsmechanismus Energie rückspeist (z.B. beim Bremsen des Arbeitsgeräts oder beim Absenken des Arms oder der Schaufel), diese Energie nicht sinnlos an den bremsenden und Reibenergie verbrauchenden Antriebsmotor, sondern vollständig über dem Elektromotor dem Energiespeicher zugeführt wird.

Der Energiespeicher kann ein elektromechanischer (kinetischer) Speicher sein. Ein derartiger elektromechanischer Speicher - auch Schwungradspeicher genannt - kann einen wahlweise motorisch und generatorisch betreibbaren Elektromotor aufweisen, wobei die Energie überwiegend in Form von kinetischer Energie durch die Rotation eines Läufers des Elektromotors speicherbar ist. Als elektromechanischer bzw. kinetischer Speicher eignet sich z.B. die "mechanische Batterie" DYNASTORE® der Firma Compact Dynamics.

Es hat sich herausgestellt, dass aufgrund der vielen kurzen Zyklen (selten länger als 30 Sekunden) eine Energiezwischenspeicherung über einen elektrischen Akkumulator bei den derzeit verfügbaren Akkumulatoren aufgrund der beschränkten Zyklushäufigkeit nicht sinnvoll ist. Zudem sind die Leistungsspitzen und -täler sehr hoch bzw. ausgeprägt, so dass sich herkömmliche Energiespeicher auf rein elektrischer bzw. elektrochemischer Basis nicht oder nur schlecht eignen.

Der oben genannte elektromechanische Energiespeicher ist speziell für sehr kurze Lade- und Entladeleistungsspitzen geeignet. Der Läufer (Rotor) des in dem elektromechanischen Speicher vorgesehenen Elektromotors dient als Schwungmasse, die die eingeleitete Energie speichert. Beim Ausspeichern wird dieser Elektromotor als Generator benutzt. Die Drehzahl des Läufers ändert sich beim Ein- und Ausspeichern. Die Motor/Generatorspannung und die Frequenzen ändern sich damit entsprechend dem Speicherpegel.

Für einen guten Wirkungsgrad sollte der in dem elektromechanischen Speicher vorgesehene Elektromotor/Generator (Speichermotor) über einen Umrichter an die Spannungs- und Frequenzbedürfnisse des an die Wirkverbindung angekoppelten Elektromotors angekoppelt sein.

Bei einem Leistungsüberschuss in der Wirkverbindung, d.h. in dem Antriebsstrang, kann somit die überschüssige Leistung zunächst von dem mit dem Antriebsstrang gekoppelten Elektromotor in elektrische Energie umgewandelt werden. Diese Energie wird durch den Umformer in geeigneter Weise umgeformt und dem elektromechanischen Speicher zugeführt, wo die elektrische Energie zum Erhöhen der Rotordrehzahl des in dem Speicher vorgesehenen Speichermotors benutzt wird.

Wenn hingegen im Fall einer Leistungsspitze festgestellt wird, dass die von dem Antriebsmotor zur Verfügung gestellte durchschnittliche Leistung nicht ausreicht, um den Arbeitsmechanismus in geeigneter Weise zu betreiben (z.B. um den Arm eines Laders anzuheben), wird ein Leistungsbedarf ermittelt, der durch Rückführen von Energie aus dem elektromechanischen Speicher gedeckt werden soll. Dazu wird der Speichermotor generatorisch betrieben, so dass sich die Rotordrehzahl vermindert. Die sich daraus im Speichermotor ergebende elektrische Energie wird über den Umformer entsprechend angepasst und dem im Antriebsstrang vorgesehenen Elektromotor zugeführt. Der unterstützt die Antriebsbewegung des Antriebsmotors, so dass schließlich ausreichend Leistung für den Arbeitsmechanismus zur Verfügung steht.

Dabei kann es vorteilhaft sein, wenn diese Aufgaben der Anpassung an die verschiedenen Drehzahlen und Leistungsrichtungen von zwei logisch verknüpften oder einer gemeinsamen Leistungsund Steuerelektronik ausgeführt wird.

Der Arbeitsmechanismus kann eine Vorrichtung aufweisen, ausgewählt aus der Gruppe
- Drehvorrichtung zum Verdrehen einer Komponente des Arbeitsgeräts relativ zu einer anderen Komponente des Arbeitsgeräts, insbesondere auch relativ zu einem Fahrwerk (z.B. ein Drehantrieb zum Drehen eines Oberwagens bei einem Bagger oder zum Heben oder Drehen eines Armes bzw. Drehen oder Ankippen einer Schaufel),
- Fahrvorrichtung zum Verfahren des Arbeitsgeräts (z.B. ein Fahrwerk und ein Fahrantrieb),
- Hubvorrichtung zum Ein- und Ausfahren einer Kolben-Zylinder-Einheit (z.B. für die Arm- und Schaufelbewegung).

Der Arbeitsmechanismus kann ein Hydrauliksystem mit wenigstens einer Hydraulikpumpe und wenigstens einer Kolben-Zylinder-Einheit aufweisen, um die gewünschte Arbeitsbewegung zu erzielen.

Im Allgemeinen besteht ein Hydrauliksystem aus mehreren parallelen Antriebssträngen mit Pumpe und Antriebseinheit. Die Hydraulikpumpe kann mit der Wirkverbindung derart gekoppelt sein, dass sie einerseits als Pumpe und andererseits als Motor betreibbar ist. Damit ist es möglich, dass Leistungsüberschüsse, die an dem Hydrauliksystem anliegen, nicht über Strömungsverluste in Form von Wärme in das Hydrauliköl eingeleitet werden, sondern mit Hilfe der als Motor arbeitenden Hydraulikpumpe in mechanische Energie gewandelt werden. So kann die Hydraulikpumpe z.B. beim Absenken des Arms dazu genutzt werden, den Antriebsstrang zusätzlich anzutreiben und so Leistung in den Antriebsstrang einzubringen. Diese Leistung kann dann in der oben beschriebenen Weise dem Energiespeicher zugeführt werden.

Es kann vorteilhaft sein, wenn in dem Hydraulikstrang wenig oder gar keine Drosselventile bzw. proportionale Steuerventile vorgesehen sind. Vielmehr ist es zweckmäßig, möglichst viele oder gar ausschließlich Sitzventile und/oder entsperrbare Rückschlagventile vorzusehen. Zusätzlich können Regelpumpen und -motoren genutzt werden, deren Leistung in Abhängigkeit von dem Bedarf an Hydraulikdruck und -volumen einstellbar ist.

Drosselventile und proportionale Steuerventile haben den Nachteil, dass erhebliche Leistung durch Strömungsverluste verloren geht, was dem oben skizzierten Hybridkonzept zuwiderlaufen würde. Stattdessen können daher zum Blockieren einer Bewegung zusätzliche Sitzventile oder die entsperrbaren Rückschlagventile verwendet werden. Falls Kraftrichtungsumkehrvorgänge notwendig werden (z.B. beim Drücken mit der Schaufel oder beim rückwärts gerichteten Abziehen der Schaufel), können auch hier entsprechende Umschaltungen der Leitungswege über Schaltventile vorgesehen werden. Anstatt die Hydraulikflüssigkeit über leistungsvernichtende Drosselventile und proportionale Steuerventile zu führen, wird somit angestrebt, dass die Hydraulikflüssigkeit möglichst ungehindert fließen kann oder - wenn ein Hydraulikstrom unerwünscht ist - vollständig blockiert wird.

Weiterhin wird daher eine Variante angegeben, bei der oben beschriebene elektromechanische Speicher samt Umrichter und Elektromotor nicht vorhanden ist. Vielmehr werden gemäß der vorstehenden Lehre überwiegend Sitzventile, Rückschlagventile und/oder entsperrbare Rückschlagventile in dem Hydrauliksystem eingesetzt, um bereits einen Energie sparenden Betrieb zu ermöglichen. Somit kann das Arbeitsgerät verhältnismäßig kostengünstig aufgebaut werden. Die Leistungs-Zwischenspeicherung in dem elektromechanischen Speicher ist bei dieser vereinfachten Variante nicht erforderlich.

Bei einer Variante kann der Arbeitsmechanismus eine Elektromotor-Generator-Kombination aufweisen, um eine Arbeitswirkung zu bewirken. Insbesondere kann dabei die Arbeitsbewegung durch einen "Elektrozylinder" erreicht werden, der klassischerweise aus einem Elektromotor / Generator und einer Spindel aufgebaut ist.

Bei der Verwendung von Elektromotoren bzw. Generatoren für die Bewirkung der Arbeitsbewegungen kann der Wirkungsgrad weiter verbessert werden, da die elektrische Energie des elektrodynamischen Energiespeichers beim Ein- und Ausspeichern nicht über die Hydraulik gewandelt werden muss, die allgemein über einen schlechteren Wirkungsgrad verfügt. Die Lastein- und - auskopplung erfolgt bei dem Gemischtsystem für den hydraulischen Anteil über dem oben beschriebenen Elektromotor/Generator im Hauptstrang. Wenn jedoch ein rein elektrisches System mit den genannten "Elektrozylindern" genutzt wird, kann die Lastein- und -auskopplung für die elektrischen Antriebe direkt zu und von den Antriebsmotoren im motorischen oder generatorischen Betrieb erfolgen.

Die gemeinsame Leistungs- und Steuerelektronik kann zum Steuern von wenigstens folgenden Parametern ausgebildet sein: Drehzahl des Antriebsmotors, Öffnen und Schließen der Kupplung zwischen Antriebsmotor und Hauptantriebsstrang, Speicher- und Entladeverhalten des Energiespeichers, Verhalten der Hydraulikpumpen, Stellung der Hydraulikventile, Frequenz und Spannung am Umrichter zwischen dem Elektromotor am Hauptantriebsstrang und dem Energiespeicher.

Bei einer Variante kann der Antriebsmotor ein Verbrennungsmotor sein. Zusätzlich kann ein Antriebs-Elektromotor vorgesehen sein, der ebenfalls über die Wirkverbindung zum Antreiben des Arbeitsmechanismus dient und geeignet ist, den Arbeitsmechanismus alleine, ohne Mitwirkung des Verbrennungsmotors zu betreiben. Zusätzlich kann zu einem elektromechanischen Energiespeicher eine Batterie (Akkumulator, Kondensator etc.) vorgesehen sein, um den Antriebs-Elektromotor mit elektrischer Energie zu versorgen. In der Speicherphase sollte die von dem Verbrennungsmotor oder dem Antriebs-Elektromotor abgegebene Leistung größer als die von dem Arbeitsmechanismus aktuell benötigte Leistung sein. In der Entladephase hingegen sollte die von dem Verbrennungsmotor oder dem Antriebs-Elektromotor abgegebene Leistung kleiner als die von dem Arbeitsmechanismus aktuell benötigte Leistung sein. Die elektrischen Ströme zu oder von dem elektromechanischen Energiespeicher können dabei im Verhältnis stärker schwanken als die elektrischen Ströme zu oder von der Batterie.

Der Antriebs-Elektromotor muss dementsprechend ausreichend groß dimensioniert sein, um die entsprechende Leistung zur Verfügung stellen zu können. Dann ist es möglich, das Arbeitsgerät wenigstens temporär ausschließlich elektrisch zu betreiben.

Als Energiespeicher für den Antriebs-Elektromotor kann eine chemische Batterie (Akkumulator) oder ein Kondensator oder eine Mischform daraus dienen und die Grundlast abdecken. Wie bei den oben beschriebenen Varianten ist zusätzlich zu dem Batterie-Energiespeicher auch ein elektromechanischer Energiespeicher vorgesehen, der die Lastspitzen und -täler ausgleicht. Dadurch muss die Batterie keine hohen Stromspitzen aufnehmen bzw. zur Verfügung stellen, was sich vorteilhaft auf ihre Lebensdauer auswirkt. Eine schnelle Ein- oder Rückspeicherung ist grundsätzlich für alle chemischen Batterien nachteilig und mindert den Strom- bzw. Spannungswirkungsgrad sowie die Lebensdauer.

Die sich gegenüber einer mittleren Last ergebenden Lastspitzen werden somit durch den elektromechanischen Speicher abgedeckt. Während der Zeiten mit niedriger Leistungsentnahme oder gar einer Energierückspeicherung, z.B. durch Bremsen des Fahrwerks oder Senken von Lasten, wird diese Energie dem elektromechanischen Speicher zugeführt, so dass er für die Abgabe von Energie in den Lastspitzen aufgeladen ist.

Der Antriebs-Elektromotor kann im Betrieb des Verbrennungsmotors auch generatorisch betreibbar sein, um die Batterie aufzuladen.

Bei einer Variante kann der Ladevorgang für die Batterie damit auch parallel zum Betrieb in Schwachlastphasen über den dann generatorisch betriebenen Antriebs-Elektromotor erfolgen. Dadurch kann die Batterie zumindest mit ihrem beschränkten Ladestrom aufgeladen werden. Ebenso ist es aber auch möglich, die Batterie bei Nichtbenutzung der Maschine über das allgemeine Stromnetz mit Hilfe eines Ladegeräts aufzuladen.

Der rein elektrische Antrieb des Arbeitsgeräts hat den Vorteil, dass das Arbeitsgerät auch wenigstens kurzfristig in geschlossenen Räumen eingesetzt werden kann. Zum Beispiel ist es in der Landwirtschaft üblich, Lader wechselnd sowohl im Freien als auch im Stall einzusetzen. Im Stallbetrieb jedoch stören die Abgase und der Motorenlärm des Verbrennungsmotors. Andererseits verlangen die Arbeitsphasen im Stall in vielen Fällen nur wenig Leistung und sind auch nach relativ kurzer Zeit abgeschlossen. Danach sind wieder längere Arbeiten im Freien, wie z.B. ein Fahrbetrieb oder das Be- und Entladen der Lagerplätze in der Scheune zu erledigen. Dabei gibt es genügend Schwachlastzeiten, in denen sowohl der elektromechanische Speicher als auch parallel der Grundlastspeicher (Batterie) aufgeladen werden können. Dabei kann die Ladeleistung für die Batterie so angepasst sein, dass eine hohe Lebensdauer erzielt wird.

Weiterhin wird ein Verfahren zum Steuern eines Hybridsystems bzw. Hybridantriebs für ein oben beschriebenes Arbeitsgerät angegeben, wobei
- der Antriebsmotor mit im Wesentlichen konstanter Abgabeleistung betrieben wird;
- überschüssige Energie, die sich aus einer Differenz zwischen der Abgabeleistung des Antriebsmotors und einem aktuell niedrigeren Bedarf des Arbeitsmechanismus ergibt, dem Energiespeicher zugeleitet wird;
- fehlende Energie, die sich aus einer Differenz zwischen der Abgabeleistung des Antriebsmotors und einem aktuell höheren Bedarf des Arbeitsmechanismus ergibt, dem Energiespeicher entnommen und dem Arbeitsmechanismus zugeführt wird.

Die konstante Abgabeleistung des Antriebsmotors kann derart dimensioniert sein, dass sie niedriger ist als ein maximaler Leistungsbedarf des Arbeitssystems. Dieser maximale Leistungsbedarf (Leistungsspitze) kann vielmehr durch die in dem Energiespeicher gespeicherte Energie abgedeckt werden, wenn der Energiespeicher entsprechend auf die konstante (mittlere) Abgabeleistung des Antriebsmotors angepasst ist.

Die Komponenten des Arbeitsgeräts, insbesondere der Antriebsmotor, der Energiespeicher und der Arbeitsmechanismus können derart dimensioniert werden, dass dann, wenn das Arbeitsgerät mit im Wesentlichen gleichmäßigen, wiederkehrenden Arbeitszyklen betrieben wird, der Ladezustand des Energiespeichers zu Beginn ihres Arbeitszyklus im Wesentlichen gleich ist. Dadurch ist sichergestellt, dass der Ladezustand des Energiespeichers nie derart tief absinkt, dass nicht mehr ausreichend Leistung für den Betrieb des Arbeitsmechanismus zur Verfügung steht.

Diese und weitere Merkmale und Vorteile der Erfindung werden nachfolgend anhand von Beispielen unter Zuhilfenahme der begleitenden Figuren näher erläutert. Es zeigen:
- Fig. 1: eine Ausführungsform eines erfindungsgemäßen Arbeitsgeräts mit Hybridsystem in schematischer Darstellung;
- Fig. 2: eine andere Ausführungsform des Hybridsystems;
- Fig. 3: wiederum eine andere Ausführungsform des Hybridsystems; und
- Fig. 4: ein Beispiel für die Veränderung des Energieinhalts im Energiespeicher über die Zeit.

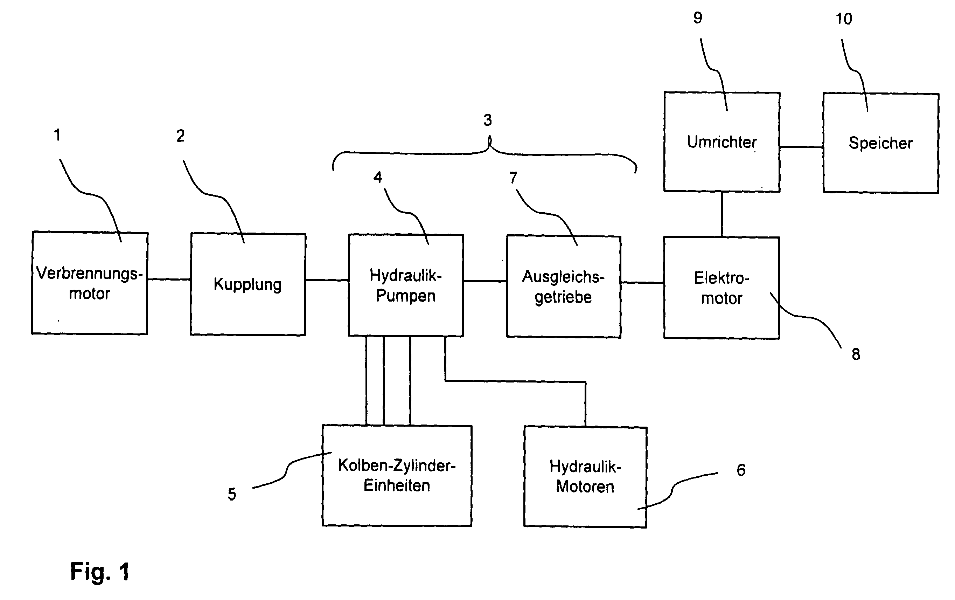

Fig. 1 zeigt in schematischer Darstellung den prinzipiellen Aufbau eines erfindungsgemäßen Hybridsystems für ein Arbeitsgerät.

Ein Verbrennungsmotor 1 ist über eine Kupplung 2 mit einem eine Wirkverbindung darstellenden Hauptantriebsstrang 3 gekoppelt. Mit Hilfe der über eine nicht dargestellte Steuereinrichtung ansteuerbaren Kupplung 2 ist es möglich, den Verbrennungsmotor 1 je nach Bedarf mit dem Hauptantriebsstrang 3 zu verbinden oder ihn davon zu trennen. Dies wird im Einzelnen später noch erläutert.

In dem Hauptantriebsstrang 3 sind eine oder mehrere Hydraulikpumpen 4 vorgesehen, die im normalen Betriebsfall durch den Verbrennungsmotor 1 angetrieben werden, um in einem Hydrauliksystem in bekannter Weise Hydraulikfluid (Hydrauliköl) zu fördern und unter Druck zu setzen. Dementsprechend sind die Hydraulikpumpen 4 mit einer oder mehreren Kolben-Zylinder-Einheiten 5 verbunden. Die Kolben-Zylinder-Einheiten 5 dienen ihrerseits wiederum dazu, z.B. den Arm eines Baggers oder Laders auf- und abzubewegen oder eine Schaufelbewegung zu bewirken.

Ebenso ist es möglich, dass die Hydraulikpumpen 4 mit einem oder mehreren Hydraulikmotoren 6 gekoppelt sind, um z.B. einen Oberwagen eines Baggers relativ zu dessen Fahrwerk zu verdrehen oder um einen Fahrantrieb zum Verfahren des Baggers oder eines Laders in bekannter Weise bereitzustellen.

Zusätzlich zu den Kolben-Zylinder-Einheiten 5 und den Hydromotoren 6 sind geeignete Ventile zum Steuern der Hydraulikflüsse vorgesehen, die aber in der nur schematischen Figur nicht gezeigt sind. Bei diesen Hydraulikventilen sollte es sich vorzugsweise um Sitzventile und Rückschlagventile bzw. entsperrbare Rückschlagventile handeln. Proportionale Steuerventile und Drosselventile sollten vermieden werden, um Strömungsverluste zu vermindern.

Die Hydraulikpumpen 4, die Kolben-Zylinder-Einheiten 5, die Hydraulikmotoren 6 sowie die Hydraulikventile bilden insoweit einen Arbeitsmechanismus des Arbeitsgeräts.

Im Hauptantriebsstrang 3 ist außerdem ein Ausgleichsgetriebe 7 angeordnet, das den Hauptantriebsstrang 3 mit einem Elektromotor 8 verbindet. Der Elektromotor 8 kann sowohl motorisch als auch generatorisch betrieben werden. Das Ausgleichsgetriebe 7 dient dazu, die Drehzahl des Hauptantriebsstrangs 3 zu erhöhen und eine für den Elektromotor 8 geeignete, höhere Drehzahl zu erreichen.

Der Elektromotor 8 ist über einen Umrichter 9 mit einem Energiespeicher 10 verbunden.

Bei dem Energiespeicher 10 handelt es sich um einen elektromechanischen kinetischen Speicher, bei dem unter anderem ein Elektromotor (Speichermotor) mit einem Stator und einem Rotor (Läufer) vorgesehen ist. Die von dem Energiespeicher 10 aufzunehmende Energie wird in Form von kinetischer Energie, d.h. Rotationsenergie des auch als Schwungmasse dienenden Rotors gespeichert. Je höher der Energiegehalt des Energiespeichers 10 ist, desto höher ist die Drehzahl des in ihm vorgesehenen Rotors. Umgekehrt sinkt der Energieinhalt des Energiespeichers 10, wenn sich die Rotordrehzahl vermindert.

Als Energiespeicher 10 eignet sich z.B. der Energiespeicher DYNASTORE® der Firma Compact Dynamics.

Zusätzlich ist eine in der Figur nicht gezeigte Leistungs- und Steuerelektronik vorgesehen, die alle verfahrensrelevanten Parameter des Systems überwacht und steuert. Dies betrifft z.B. die Drehzahl des Verbrennungsmotors 1, den Schaltzustand der Kupplung 2, die Leistungsaufnahme der Hydraulikpumpen 4 aufgrund eines Leistungsbedarfs der Kolben- und Zylindereinheiten 5 sowie der Hydromotoren 6, die Stellung der Hydraulikventile, eine Erregung am Elektromotor 8, das Umrichterverhalten des Umrichters 9 und die Steuerung des Energiespeichers 10.

Die Leistungs- und Steuerelektronik stellt die Drehzahl des Verbrennungsmotors 1 auf einen voreingestellten optimalen Drehzahlwert ein, in dem der Wirkungsgrad des Verbrennungsmotors 1 besonders hoch ist. Dies kann je nach aktuellem Arbeitsvorgang dazu führen, dass überschüssige Energie vorhanden ist, die nicht über die Hydraulikpumpen 4 in das Hydrauliksystem eingebracht werden müssen, weil der aktuelle Arbeitsvorgang diese Energie nicht benötigt. In diesem Fall bewirkt die Leistungs- und Steuerelektronik eine entsprechende Erregung des Elektromotors 8, um ihn generatorisch zu betreiben. Die dadurch entstehende elektrische Energie wird durch den Umrichter hinsichtlich Frequenz und Spannung angepasst und dem Energiespeicher 10 zugeführt. Der in dem Energiespeicher 10 vorgesehene Elektromotor, z.B. ein Magnetmotor oder ein Reluktanzmotor, wird entsprechend angeregt, so dass sich die Drehzahl des Rotors im Energiespeicher 10 erhöht. Auf diese Weise wird Energie gespeichert.

Wenn in einem nachfolgenden Arbeitsvorgang, z.B. beim Anheben einer gefüllten Schaufel, festgestellt wird, dass ein erhöhter Leistungsbedarf besteht und die von dem Verbrennungsmotor 1 abgegebene mittlere Leistung nicht ausreicht, um diesen Leistungsbedarf abzudecken, bewirkt die Leistungs- und Steuerelektronik, dass zusätzliche Energie von dem Energiespeicher 10 rückgeführt wird.

Zu diesem Zweck wird der Elektromotor in dem Energiespeicher 10 generatorisch betrieben, so dass der rotierende Rotor einen elektrischen Strom erzeugt, der über den Umrichter 9 dem Elektromotor 8 zugeführt wird. Der Elektromotor 8 wird in diesem Fall motorisch betrieben und überträgt Antriebsleistung über das Ausgleichsgetriebe 7 in den Hauptantriebsstrang. Diese Leistung dient zur Unterstützung der von dem Verbrennungsmotor 1 zur Verfügung gestellten mittleren Leistung. Auf diese Weise kann der gegenwärtig erforderliche Arbeitsgang durchgeführt werden, ohne dass die Ausgangsleistung des Verbrennungsmotors erhöht werden muss.

Im Fall eines Leistungsüberschusses, z.B. beim Absenken einer gefüllten Schaufel oder beim Abbremsen des Fahrwerks, ist es auch möglich, den Verbrennungsmotor 1 mit Hilfe der Kupplung 2 kurzzeitig von dem Hauptantriebsstrang 3 zu trennen. Gleichzeitig sollte die Drehzahl des Verbrennungsmotors 1 geregelt werden, um sie nicht unnötig ansteigen zu lassen. Die über das Hydrauliksystem und die Hydraulikpumpen 4 in den Hauptantriebsstrang 3 rückgeführte Leistung wird dann direkt über das Ausgleichsgetriebe 7, den Elektromotor 8 und den Umrichter 9 in den Energiespeicher 10 eingespeist. Sie kann in einem nachfolgenden Arbeitsgang dann wieder umgekehrt zur Unterstützung des Verbrennungsmotors 1 rückgeführt werden.

Es sind noch weitere Arbeits- bzw. Steuerzustände denkbar, die geeignete Maßnahmen der Leistungs- und Steuerelektronik erforderlich machen, um die zur Verfügung stehende Energie bestmöglich auszunutzen. Der Verbrennungsmotor 1 kann insgesamt kleiner dimensioniert sein, da er nicht mehr zum Abdecken von Spitzenleistungen erforderlich ist, sondern nur noch eine konstante mittlere Leistung abgeben muss.

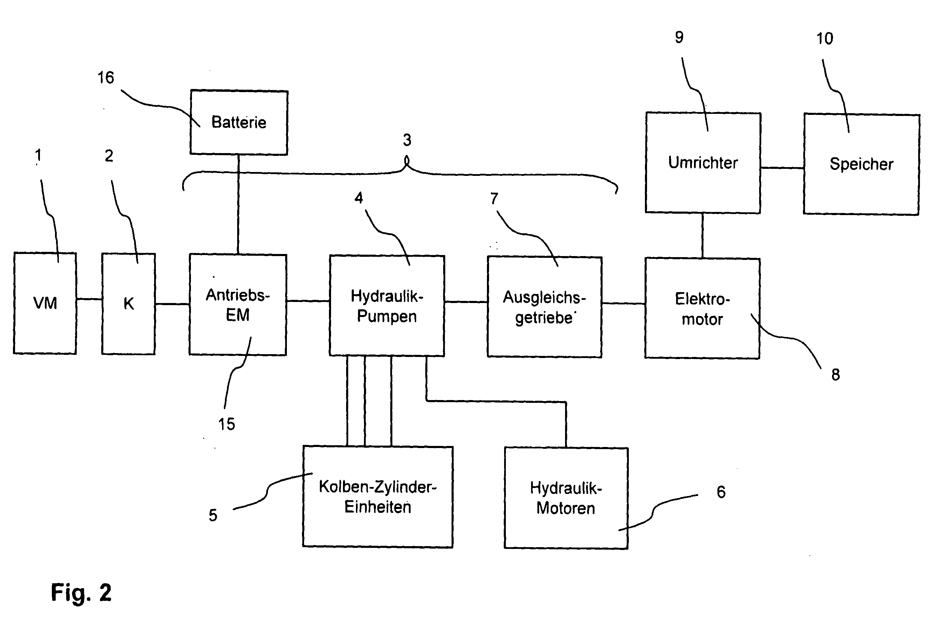

Fig. 2 zeigt eine andere Ausführungsform in schematischer Darstellung. Dabei ist in dem Hauptantriebsstrang ein Antriebs-Elektromotor 15 vorgesehen, der mit einer Batterie 16 gekoppelt ist. Der Antriebs-Elektromotor 15 ist ausreichend groß dimensioniert, um gegebenenfalls in der Lage zu sein, alleine den gesamten Arbeitsmechanismus des Arbeitsgeräts mit Leistung zu versorgen. Die maximale Leistungsabgabefähigkeit der Batterie kann jedoch deutlich niedriger liegen als die Motorleistung des Elektromotors, da Leistungsspitzen durch die gleichzeitige Nutzung der Batterie und des elektromechanischen Speichers abgedeckt werden. Eine weitere Baugrößenreduktion der elektrischen Komponenten, Elektromotor und Batterie, kann dadurch verwirklicht werden, dass bei wirklich schweren Arbeiten mit höchster Leistung der Verbrennungsmotor kurzzeitig zusätzlich benutzt wird.

Weitere Komponenten, also insbesondere der Verbrennungsmotor 1, die Kupplung 2 und das Hydrauliksystem mit den Hydraulikpumpen 4können analog zu der Variante von Fig. 1 aufgebaut sein.

Der Antriebs-Elektromotor 15 versetzt das Arbeitsgerät in die Lage, ausschließlich über einen bestimmten Zeitraum elektrisch angetrieben zu werden. Dieser Zeitraum bestimmt sich durch die Leistungsanforderung des Arbeitsmechanismus sowie durch die Kapazität der Batterie 16. Unter dem Begriff Batterie ist in diesem Zusammenhang neben einer elektrochemischen Batterie (Akkumulator) auch ein Kondensator oder eine Mischform aus Akkumulator und Kondensator zu verstehen. Maßgeblich ist, dass die elektrische Energie in chemisch-physikalischer Form gespeichert wird.

Der Verbrennungsmotor 1 kann dazu genutzt werden, über den dann generatorisch betriebenen Antriebs-Elektromotor 15 die Batterie 16 aufzuladen.

Der Bediener hat die Möglichkeit, wahlweise zwischen einem Antrieb durch den Verbrennungsmotor 1 und durch den Antriebs-Elektromotor 15 umzuschalten. Dies ist z.B. besonders geeignet, wenn das Arbeitsgerät temporär auch in geschlossenen Räumen betrieben werden soll.

Bei einer ebenfalls in Fig. 2 angedeuteten Variante ist zusätzlich auch das Ausgleichsgetriebe 7, der Elektromotor 8, der Umrichter 9 und der Energiespeicher 10 vorgesehen, die schon oben anhand von Fig. 1 beschrieben wurden.

Somit sind in Fig. 2 zwei Varianten gezeigt, nämlich eine Variante nur mit dem Antriebs-Elektromotor 15, aber ohne die für die kurzfristige Energiespeicherung erforderlich Komponenten, nämlich das Ausgleichsgetriebe 7, den Elektromotor 8, der Umrichter 9 und der Energiespeicher 10. Die zweite Variante schließt diese Komponenten jedoch mit ein.

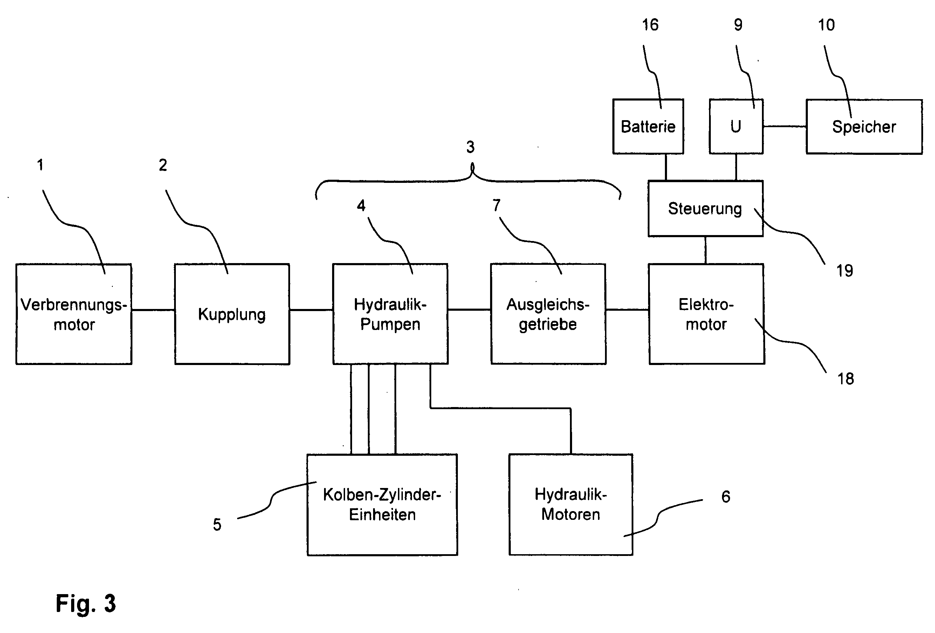

Fig. 3 zeigt eine weitere Variante, bei der der Elektromotor 8 mit dem Antriebs-Elektromotor 15 zu einem Elektromotor 18 kombiniert ist. Dadurch ist es nicht erforderlich, zwei separate Elektromotoren 8 und 15 vorzusehen.

Mit Hilfe einer geeigneten Steuerelektronik 19 wird der Elektromotor 18 in geeigneter Weise mit der Batterie 16 und/oder dem Umrichter 9 verbunden, um je nach Betriebszustand Energie aus der Batterie 16 oder dem Speicher 10 zu entnehmen oder dorthin zurückzuführen.

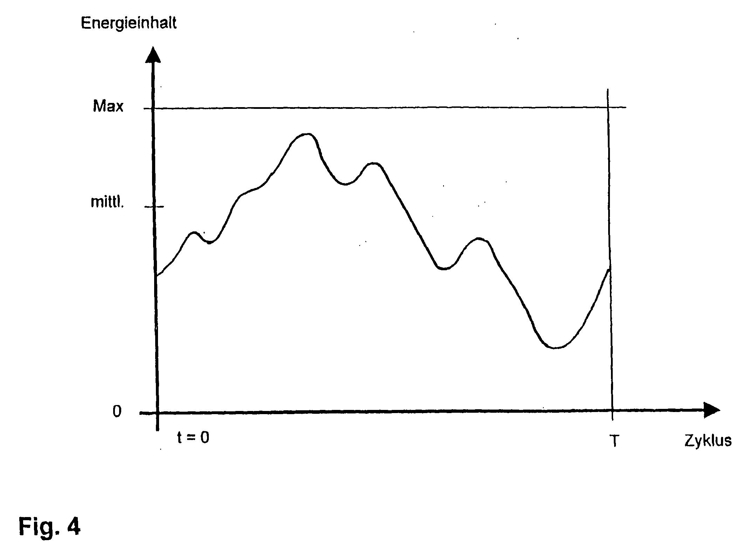

Fig. 4 zeigt in schematischer Darstellung ein Beispiel für den Verlauf des Energieinhalts im Energiespeicher 10 über der Zeit.

Dargestellt ist ein Arbeitszyklus von z.B. 20 bis 30 Sekunden, der sich typischerweise bei dem Arbeitsgerät mehrfach wiederholt. Wie gezeigt, ist der Energieinhalt zu Beginn des Arbeitszyklus (t = 0) gleich dem Energieinhalt zum Ende des Arbeitszyklus (t = T). Innerhalb des Arbeitszyklus schwankt der Energieinhalt stark und geht bei Leistungsanforderung durch den Arbeitsmechanismus nach unten, während er bei einem Leistungsüberschuss ansteigt.

Der Verbrennungsmotor 1 kann derart ausgelegt werden, dass er konstant eine Leistung zur Verfügung stellt, die gewährleistet, dass der Energiespeicher nie vollständig entleert wird. Der Energiespeicher 10 wiederum sollte derart ausgelegt werden, dass er nur in Ausnahmefällen vollständig gefüllt wird. Wie Fig. 4 zeigt, erreicht dann der Energieinhalt idealerweise weder den Maximalwert (Max) noch den Minimalwert (0).

## Patentansprüche

1. Arbeitsgerät, mit
- einem Antriebsmotor (1);
- einem von dem Antriebsmotor (1) über eine Wirkverbindung (3) antreibbaren Arbeitsmechanismus (4, 5, 6) zum Bewirken einer Arbeitsbewegung; und mit
- einem mit der Wirkverbindung (3) gekoppelten Energiespeicher (10) zum Aufnehmen von Energie in einer Speicherphase, in der die von dem Antriebsmotor (1) abgegebene Leistung größer als die von dem Arbeitsmechanismus (4, 5, 6) aktuell benötigte Leistung ist, und zum Abgeben von Energie in einer Entladephase, in der die von dem Antriebsmotor (1) abgegebene Leistung kleiner als die von dem Arbeitsmechanismus (4, 5, 6) aktuell benötigte Leistung ist;
wobei
- als Kopplung zwischen der Wirkverbindung (3) und dem Energiespeicher (10) ein in der Speicherphase generatorisch und in der Entladephase motorisch betreibbarer Elektromotor (8) vorgesehen ist; **dadurch gekennzeichnet, dass**
- der Energiespeicher (10) ein elektromechanischer Speicher ist;
- der elektromechanische Speicher (10) einen motorisch und generatorisch betreibbaren Elektromotor aufweist; und wobei
- die Energie überwiegend in Form von kinetischer Energie durch eine Rotation eines Läufers des Elektromotors speicherbar ist.

2. Arbeitsgerät nach Anspruch 1, **dadurch gekennzeichnet, dass** die Wirkverbindung zwischen Antriebsmotor (1) und Arbeitsmechanismus (4, 5, 6) durch eine Kupplung (2) trennbar ist.

3. Arbeitsgerät nach einem der vorangehenden Ansprüche, **dadurch gekennzeichnet, dass** in der Wirkverbindung (3) zwischen dem Antriebsmotor (1) und dem Elektromotor (8) ein Ausgleichsgetriebe (7) vorgesehen ist;

4. Arbeitsgerät nach einem der vorangehenden Ansprüche, **dadurch gekennzeichnet, dass** der Arbeitsmechanismus eine Vorrichtung aufweist, ausgewählt aus der Gruppe
- Drehvorrichtung (6) zum Verdrehen einer Komponente des Arbeitsgeräts relativ zu einer anderen Komponente des Arbeitsgeräts, insbesondere relativ zu einem Fahrwerk,
- Fahrvorrichtung (6) zum Verfahren des Arbeitsgeräts,
- Hubvorrichtung (5) zum Ein- und Ausfahren einer Kolben-Zylinder-Einheit.

5. Arbeitsgerät nach einem der vorangehenden Ansprüche, **dadurch gekennzeichnet, dass** der Arbeitsmechanismus ein Hydrauliksystem mit wenigstens einer Hydraulikpumpe (4) und wenigstens einer Kolben-Zylinder-Einheit (5) oder einen Hydraulikmotor (6) aufweist.

6. Arbeitsgerät nach einem der vorangehenden Ansprüche, **dadurch gekennzeichnet, dass** die Hydraulikpumpe (4) mit der Wirkverbindung (3) gekoppelt ist, derart, dass sie einerseits als Pumpe und andererseits als Motor betreibbar ist.

7. Arbeitsgerät nach einem der vorangehenden Ansprüche, **dadurch gekennzeichnet, dass** in dem Hydraulikstrang (4, 5, 6) keine Drosselventile und keine proportionalen Steuerventile vorgesehen sind, sondern ausschließlich Sitzventile und/oder entsperrbare Rückschlagventile sowie Regelpumpen und -motoren, deren Leistung in Abhängigkeit von dem Bedarf an Hydraulikdruck und -volumen einstellbar ist.

8. Arbeitsgerät nach einem der vorangehenden Ansprüche, **dadurch gekennzeichnet, dass** der Arbeitsmechanismus wenigstens eine Elektromotor-Generator-Kombination aufweist, zum Bewirken einer Arbeitsbewegung.

9. Arbeitsgerät nach einem der vorangehenden Ansprüche, **dadurch gekennzeichnet, dass** eine gemeinsame Leistungs- und Steuerelektronik vorgesehen ist, zum gemeinsamen Steuern von wenigstens einem der folgenden Parameter:
- Drehzahl des Antriebsmotors (1);
- Öffnen und Schließen einer optionalen Kupplung (2);
- Speicher- und Entladeverhalten des Energiespeichers (10);
- Umwandelverhalten eines Umrichters (9);
- Komponenten des Arbeitsmechanismus, insbesondere einer Hydraulikpumpe (4) oder eines Hydrauliksystems.

10. Arbeitsgerät nach einem der vorangehenden Ansprüche, **dadurch gekennzeichnet, dass**
- der Antriebsmotor ein Verbrennungsmotor (1) ist;
- ein Antriebs-Elektromotor (15) vorgesehen ist, der ebenfalls über die Wirkverbindung zum Antreiben des Arbeitsmechanismus (4, 5, 6) dient und geeignet ist, den Arbeitsmechanismus allein, ohne Mitwirkung des Verbrennungsmotors (1) zu betreiben;
- zusätzlich zu dem Energiespeicher (10) eine Batterie (16) vorgesehen ist, zum Versorgen des Antriebs-Elektromotors (15) mit elektrischer Energie;
- in der Speicherphase die von dem Verbrennungsmotor (1) oder dem Antriebs-Elektromotor (15) abgegebene Leistung größer als die von dem Arbeitsmechanismus aktuell benötigte Leistung ist, und in der Entladephase die von dem Verbrennungsmotor (1) oder dem Antriebs-Elektromotor (15) abgegebene Leistung kleiner als die von dem Arbeitsmechanismus aktuell benötigte Leistung ist;
- die elektrischen Ströme zu oder von dem Energiespeicher (10) im Verhältnis stärker schwanken als die elektrischen Ströme zu oder von der Batterie (16).

11. Arbeitsgerät, mit
- einem Verbrennungsmotor (1);
- einem von dem Verbrennungsmotor (1) über eine Wirkverbindung (3) antreibbaren Arbeitsmechanismus (4, 5, 6) zum Bewirken einer Arbeitsbewegung;
- einem Antriebs-Elektromotor (15), der ebenfalls über die Wirkverbindung zum Antreiben des Arbeitsmechanismus dient und geeignet ist, den Arbeitsmechanismus allein, ohne Mitwirkung des Verbrennungsmotors (1) zu betreiben; **gekennzeichnet durch**
- eine Batterie (16) in Kombination mit einem elektromechanischen Energiespeicher oder in Kombination mit einem elektromechanischen Energiespeicher und einem elektrischen Kondensator, zum Versorgen des Antriebs-Elektromotors (15) mit elektrischer Energie.

12. Arbeitsgerät nach Anspruch 10 oder 11, **dadurch gekennzeichnet, dass** der Antriebs-Elektromotor (15) im Betrieb des Verbrennungsmotors (1) auch generatorisch betreibbar ist, zum Aufladen der Batterie (16).

13. Verfahren zum Steuern eines Hybridsystems eines Arbeitsgeräts nach einem der vorstehenden Ansprüche, wobei
- der Antriebsmotor (1) mit im Wesentlichen konstanter Abgabeleistung betrieben wird;
- überschüssige Energie, die sich aus einer Differenz zwischen der Abgabeleistung des Antriebsmotors (1) und einem aktuell niedrigeren Bedarf des Arbeitsmechanismus (4, 5, 6) ergibt, dem Energiespeicher (10) zugeleitet wird;
- fehlende Energie, die sich aus einer Differenz zwischen der Abgabeleistung des Antriebsmotors (1) und einem aktuell höheren Bedarf des Arbeitsmechanismus ergibt, dem Energiespeicher (10) entnommen und dem Arbeitsmechanismus zugeführt wird;
- die konstante Abgabeleistung des Antriebsmotors (1) derart dimensioniert ist, dass sie niedriger ist als ein maximaler Leistungsbedarf des Arbeitssystems (4, 5, 6);
- das Arbeitsgerät mit im Wesentlichen gleichmäßigen Arbeitszyklen betrieben wird; und wobei
- der Ladezustand des Energiespeichers (10) zu Beginn jedes Arbeitszyklus im Wesentlichen gleich ist.

## Claims

1. Working machine, having
- a drive motor (1),
- a working mechanism (4, 5, 6) for effecting a working movement and which can be driven by the drive motor (1) via an operative connection (3); and having
- an energy store (10), which is coupled to the operative connection (3), for receiving energy in a storage phase in which the output from the drive motor (1) is greater than the output currently required by the working mechanism (4, 5, 6), and for outputting energy in a discharge phase in which the output from the drive motor (1) is less than the output currently required by the working mechanism (4, 5, 6);
wherein
- an electric motor (8) which can be operated as a generator in the storage phase and as a motor in the discharge phase is provided as a coupling between the operative connection (3) and the energy store (10);
**characterised in that**
- the energy store (10) is an electromechanical store;
- the electromechanical store (10) has an electric motor which is operable as a motor and as a generator; and wherein
- the energy is predominantly storable in the form of kinetic energy through a rotation of a rotor of the electric motor.

2. Working machine as claimed in claim 1, **characterised in that** the operative connection between the drive motor (1) and working mechanism (4, 5, 6) can be released by a clutch (2).

3. Working machine as claimed in any one of the preceding claims, **characterised in that** a compensating gearbox (7) is provided in the operative connection (3) between the drive motor (1) and the electric motor (8).

4. Working machine as claimed in any one of the preceding claims, **characterised in that** the working mechanism has a device selected from the following group:
- rotational device (6) for rotating a component of the working machine relative to another component of the working machine, in particular relative to a chassis,
- travel device (6) for causing the working machine to travel,
- stroke device (5) for causing a piston-cylinder unit to travel in and out.

5. Working machine as claimed in any one of the preceding claims, **characterised in that** the working mechanism has a hydraulic system having at least one hydraulic pump (4) and at least one of a piston-cylinder unit (5) and a hydraulic motor (6).

6. Working machine as claimed in any one of the preceding claims, **characterised in that** the hydraulic pump (4) is coupled to the operative connection (4) in such a way that it is operable, on the one hand, as a pump and, on the other hand, as a motor.

7. Working machine as claimed in any one of the preceding claims, **characterised in that** in the hydraulic drive train (4, 5, 6) no throttle valves and no proportional control valves are provided but rather exclusively seat valves and/or unlockable non-return valves and variable-capacity pumps and variable-speed motors, the output of which can be adjusted as a function of the required hydraulic pressure and hydraulic volume.

8. Working machine as claimed in any one of the preceding claims, **characterised in that** the working mechanism has at least one electric motor-generator combination in order to effect a working movement.

9. Working machine as claimed in any one of the preceding claims, **characterised in that** common power and control electronics are provided for joint control of at least one of the following parameters:
- rotational speed of the drive motor (1);
- opening and closing of an optional clutch (2);
- storage and discharge behaviour of the energy store (10);
- conversion behaviour of a converter (9);
- components of the working mechanism, in particular of a hydraulic pump (4) or of a hydraulic system.

10. Working machine as claimed in any one of the preceding claims, **characterised in that**
- the drive motor is an internal combustion engine (1);
- an electric drive motor (15) is provided which also acts via the operative connection to drive the working mechanism (4, 5, 6) and is suitable to operate the working mechanism by itself without cooperation of the internal combustion engine (1);
- in addition to the energy store (10), a battery (16) is provided to supply the electric drive motor (15) with electrical energy;
- in the storage phase, the output from the internal combustion engine (1) or the electric drive motor (15) is greater than the output currently required by the working mechanism, and, in the discharge phase, the output from the internal combustion engine (1) or from the electric drive motor (15) is less than the output currently required by the working mechanism;
- the electric currents to or from the energy store (10) fluctuate relatively more strongly than the electric currents to or from the battery (16).

11. Working machine, having
- an internal combustion engine (1);
- a working mechanism (4, 5, 6) which can be driven by the internal combustion engine (1) via an operative connection (3) in order to effect a working movement;
- an electric drive motor (15) which also acts via the operative connection to drive the working mechanism and is suitable to operate the working mechanism by itself without cooperation of the internal combustion engine (1); **characterised by**
- a battery (16), in combination with an electromechanical energy store or in combination with an electromechanical energy store and an electric capacitor, for supplying the electric drive motor (15) with electrical energy.

12. Working machine as claimed in claim 10 or 11, **characterised in that**, during operation of the internal combustion engine (1), the electric drive motor (15) is also operable as a generator in order to charge the battery (16).

13. Method for controlling a hybrid system of a working machine as claimed in any one of the preceding claims, wherein
- the drive motor (1) is operated with an essentially constant output power;
- excess energy, which results from a difference between the output power of the drive motor (1) and a currently lower requirement of the working mechanism (4, 5, 6), is directed to the energy store (10);
- still required energy, which results from a difference between the output power of the drive motor (1) and a currently higher requirement of the working mechanism, is drawn from the energy store (10) and supplied to the working mechanism;
- the constant output power of the drive motor (1) is set such that it is lower than a maximum output requirement of the working system (4, 5, 6);
- the working machine is operated with essentially uniform working cycles; and wherein
- the charge state of the energy store (10) is essentially the same at the beginning of each working cycle.

## Revendications

1. Appareil de travail, comprenant
- un moteur d'entraînement (1) ;
- un mécanisme de travail (4, 5, 6) pouvant être entraîné par le moteur d'entraînement (1) au moyen d'une liaison active (3) pour réaliser un déplacement de travail ; et
- un accumulateur d'énergie (10) couplé avec la liaison active (3) pour l'absorption d'énergie dans une phase d'accumulateur, au cours de laquelle la puissance délivrée par le moteur d'entraînement (1) est supérieure à la puissance utilisée actuellement par le mécanisme de travail (4, 5, 6), et pour la distribution d'énergie dans une phase de décharge, au cours de laquelle la puissance délivrée par le moteur d'entraînement (1) est inférieure à la puissance utilisée actuellement par le mécanisme de travail (4, 5, 6) ;
- un moteur électrique (8) pouvant être utilisé comme générateur dans la phase d'accumulateur et comme moteur dans la phase de décharge étant prévu comme accouplement entre la liaison active (3) et l'accumulateur d'énergie (10) ;
**caractérisé en ce que**
- l'accumulateur d'énergie (10) est un accumulateur électromécanique ;
- l'accumulateur (10) électromécanique présente un moteur électrique pouvant être utilisé comme moteur et comme générateur ; et
- l'énergie pouvant être stockée principalement sous forme d'énergie cinétique par une rotation d'un rotor du moteur électrique.

2. Appareil de travail selon la revendication 1, **caractérisé en ce que** la liaison active entre le moteur d'entraînement (1) et le mécanisme de travail (4, 5, 6) peut être séparée par un accouplement (2).

3. Appareil de travail selon l'une des revendications précédentes, **caractérisé en ce qu'**un engrenage d'équilibrage (7) est prévu dans la liaison active (3) entre le moteur d'entraînement (1) et le moteur électrique (8).

4. Appareil de travail selon l'une des revendications précédentes, **caractérisé en ce que** le mécanisme de travail présente un dispositif, sélectionné dans le groupe suivant
- dispositif de rotation (6) pour la rotation d'un composant de l'appareil de travail par rapport à un autre composant de l'appareil de travail, en particulier par rapport à un châssis,
- dispositif de roulement (6) pour le déplacement de l'appareil de travail,
- dispositif de levage (5) pour l'entrée et la sortie d'une unité piston-cylindre.

5. Appareil de travail selon l'une des revendications précédentes, **caractérisé en ce que** le mécanisme de travail présente un système hydraulique avec au moins une pompe hydraulique (4) et au moins une unité piston-cylindre (5) ou un moteur hydraulique (6).

6. Appareil de travail selon l'une des revendications précédentes, **caractérisé en ce que** la pompe hydraulique (4) est couplée avec la liaison active (3), de telle sorte qu'elle peut être utilisée d'une part comme pompe et d'autre part comme moteur.

7. Appareil de travail selon l'une des revendications précédentes, **caractérisé en ce qu'**aucune soupape d'étranglement et aucune soupape de commande proportionnelle ne sont prévues dans la branche hydraulique (4, 5, 6), et aucune soupape de commande proportionnelle, mais exclusivement des sièges de soupape et/ou des clapets anti-retour déblocables ainsi que des pompes et des moteurs de réglage, dont la puissance peut être réglée en fonction des besoins en pression et en volume d'hydraulique.

8. Appareil de travail selon l'une des revendications précédentes, **caractérisé en ce que** le mécanisme de travail présente au moins une combinaison moteur électrique-générateur, pour entraîner un déplacement de travail.

9. Appareil de travail selon l'une des revendications précédentes, **caractérisé en ce qu'**il est prévu une électronique commune de puissance et de commande, pour la commande commune d'au moins l'un des paramètres suivants :
- régime du moteur d'entraînement (1) ;
- ouverture et fermeture d'un accouplement (2) optionnel ;
- comportement à l'accumulation et à la décharge de l'accumulateur d'énergie (10) ;
- comportement à la conversion d'un convertisseur (9) ;
- composants du mécanisme de travail, en particulier d'une pompe hydraulique (4) ou d'un système hydraulique.

10. Appareil de travail selon l'une des revendications précédentes, **caractérisé en ce que**
- le moteur d'entraînement est un moteur à combustion (1) ;
- un moteur électrique d'entraînement (15) est prévu, lequel sert également par la liaison active à l'entraînement du mécanisme de travail (4, 5, 6) et est approprié pour exploiter le mécanisme de travail seul, sans l'action conjuguée du moteur à combustion (1) ;
- en supplément de l'accumulateur d'énergie (10), il est prévu une batterie (16), pour l'alimentation du moteur électrique d'entraînement (15) en énergie électrique ;
- dans la phase d'accumulation, la puissance délivrée par le moteur à combustion (1) ou le moteur électrique d'entraînement (15) est supérieure à la puissance utilisée actuellement par le mécanisme de travail, et lors de la phase de décharge, la puissance délivrée par le moteur à combustion (1) ou le moteur électrique d'entraînement (15) est inférieure à la puissance utilisée actuellement par le mécanisme de travail ;
- les courants électriques allant à l'accumulateur d'énergie ou partant de l'accumulateur d'énergie (10) varient dans une proportion plus forte que les courants électriques allant à la batterie ou partant de la batterie (16).

11. Appareil de travail, comprenant
- un moteur à combustion (1) ;
- un mécanisme de travail (4, 5, 6) pouvant être entraîné par le moteur à combustion (1) au moyen d'une liaison active (3) pour générer un déplacement de travail ;
- un moteur électrique d'entraînement (15), qui sert également à l'entraînement du mécanisme de travail par l'intermédiaire de la liaison active et est approprié pour exploiter le mécanisme de travail seul, sans l'action conjuguée du moteur à combustion (1) ; **caractérisé par**
- une batterie (16) en combinaison avec un accumulateur d'énergie électromécanique ou en combinaison avec un accumulateur d'énergie électromécanique et un condensateur électrique, pour l'alimentation du moteur électrique d'entraînement (15) avec de l'énergie électrique.

12. Appareil de travail selon la revendication 10 ou 11, **caractérisé en ce que** le moteur électrique d'entraînement (15) peut être exploité également comme générateur pendant le fonctionnement du moteur à combustion (1), pour le chargement de la batterie (16).

13. Procédé pour la commande d'un système hybride d'un appareil de travail selon l'une des revendications précédentes,
- le moteur d'entraînement (1) fonctionnant avec une puissance délivrée sensiblement constante ;
- l'énergie excédentaire, qui résulte d'une différence entre la puissance délivrée du moteur d'entraînement (1) et un besoin momentanément plus faible du mécanisme de travail (4, 5, 6), est amené à l'accumulateur d'énergie (10) ;
- l'énergie manquante, qui résulte d'une différence entre la puissance délivrée du moteur d'entraînement (1) et un besoin momentanément supérieur du mécanisme de travail, est prélevée sur l'accumulateur d'énergie (10) et est amenée au mécanisme de travail ;
- la puissance délivrée constante du moteur d'entraînement (1) est dimensionnée de telle sorte qu'elle est plus faible qu'un besoin de puissance maximal du système de travail (4, 5, 6) ;
- l'appareil de travail est utilisé avec des cycles de travail sensiblement réguliers ; et
- l'état de charge de l'accumulateur d'énergie (10) est sensiblement identique au début de chaque cycle de travail.
